# EUROPÄISCHE PATENTSCHRIFT

(11) **EP 1 793 156 B1**
(45) Veröffentlichungstag und Bekanntmachung des Hinweises auf die Patenterteilung: **05.08.2009**
(21) Anmeldenummer: 06019247.3
(22) Anmeldetag: 14.09.2006
(51) Int. Cl.: F16L 55/28, F16L 55/44, G01N 27/90, G01N 29/22, G01N 29/265, G01M 3/00

(54) **Trageinheit eines Molchs und Verfahren zum Positionieren von Tragelementen eines Molchs**
Supporting assembly of a pig and method for positioning supporting elements of a pig
Ensemble de support d'un racleur et procédé de positionner des éléments de support d'un racleur

(30) Priorität: 30.11.2005 DE 102005056969
(43) Veröffentlichungstag der Anmeldung: 06.06.2007
(73) Patentinhaber: PII Pipetronix GmbH, 76297 Stutensee (DE)
(72) Erfinder: Veit, Peter, 66482 Zweibrücken (DE)
(74) Vertreter: Lempert, Jost

(56) Entgegenhaltungen:
- EP-A1- 0 078 072
- EP-A2- 1 046 856
- EP-B1- 0 255 619
- WO-A-20/04088301
- DE-A1- 19 746 510
- DE-A1- 19 746 511
- DE-C1- 10 210 746
- DE-U1- 20 306 958

## Beschreibung

Die Erfindung betrifft eine Trageinheit eines durch eine Rohrleitung bewegbaren Molchs nach dem Oberbegriff des Anspruchs 1 sowie ein Verfahren nach dem Oberbegriff des Anspruchs 24.

Molche werden in Rohrleitungen, insbesondere für den Wasser-, Öl- oder Gastransport, zum Auffinden von Fehlern in der Rohrleitung, zum Reinigen von Rohrleitungen oder dergleichen eingesetzt. Diese Aufgaben werden im Wesentlichen von am Außenumfang auf Tragteilen angeordneten Bauteilen übernommen, wie z.B. Sensoren zur Überprüfung des Zustands der Wandung der Rohrleitung. Dabei ist ein wohl definierbarer Abstand der Bauteile zur Innenwandung oder Außenwand bei unterschiedlichen Querschnittsgrößen des Molches vorgesehen. Die Bauteile sind an radial expandierbaren Tragelementen fixiert, die in Umfangsrichtung der Rohrleitung aufeinanderfolgend angeordnet sind.

Um derartige Molche in Rohrleitungen mit verschiedenen Normweiten von beispielsweise 26 und 42 Zoll verwenden bzw. die Molche über Zuführleitungen in die Rohrleitung einschleusen zu können, sind Prüfmolche mit an einem zentralen Zugteil angeordneten, radial expandierbaren Tragstrukturen bekannt, an deren Umfang Sensoren angeordnet sind. Solche Tragstrukturen mit in Abhängigkeit vom Innenquerschnitt der Rohrleitung veränderbarem Umfang weisen beispielsweise mehrere, um senkrecht zur Längsmittelachse des Zugteils angeordnete Achsen schwenkbare, im Wesentlichen strahlenartige angeordnete Tragarme auf (DE 197 46 510 A1, DE 197 46 511 A1).

Aus der DE 197 46 511 A1 ist weiterhin bekannt, dass Sensoren umfangsmäßig versetzt auf jeweils zwei Traggestellen angeordnet sind, die axial gegeneinander bewegbar sind, und die bei einem gegebenen Rohrumfang derart ineinander verfahren werden können, dass die Sensoren den gesamten Umfang der Rohrleitung überdecken. Dabei sind die Sensoren nicht gleichmäßig verteilt, da die Abstände zwischen den zwei Traggestellen variieren. Diese Bauweise ist relativ aufwändig und führt zu hohen Produktionskosten, da für jeden unterschiedlichen Rohrdurchmesser jeweils ein anderes Traggestell benötigt wird. Weiterhin ist eine größere Messauflösung in Umfangsrichtung der Rohrleitung wünschenswert, wozu eine größere Anzahl von Sensoren relativ zum Rohrdurchmesser benötigt werden.

Die DE 102 10 746 C1 beschreibt einen Sensorträgerkörper eines Molchs, bei dem einzelne Segmente in Umfangsrichtung der Rohrleitung zu einem Hohlkörper mit zylinderförmiger Oberfläche zusammengefügt sind, wobei die Segmente in axialer Richtung mindestens zwei aufeinanderfolgende Kufenpaare umfassen, die mit Verbindungselementen elastisch miteinander verbunden sind, um eine hohe Bogenpassierbarkeit des Molchs zu erzielen.

Aus der EP 0 255 619 B1 und der DE 203 06 958 U1 sind jeweils Sensor-Träger in Form einer Manschette mit gummielastischen Eigenschaften bekannt, der sich an die Rohrwandung, insbesondere auch an Unebenheiten der Rohrleitung anpassen kann. Diese Anordnungen führen zu einer höheren Betriebsund Funktionssicherheit des Molchs, eignen sich jedoch nur für die Prüfung von Rohrleitungen mit einer Normweite. Für unterschiedliche Rohrdurchmesser sind verschiedene Bauweisen erforderlich, was zu hohen Herstellungskosten und zu einem großen Lagerungsaufwand führt.

Die WO 2004/088301 A1 zeigt eine Trageinheit für Antriebsund Führungsrollen eines durch eine Rohrleitung bewegbaren Molches, wobei die Rollen an den äußeren Enden von unter Federwirkung radial expandierbaren Tragelementen angeordnet sind. Über den Umfang sind drei Tragelemente verteilt, deren jedes mit einem Verbindungsglied verbunden ist, wobei durch die Verbindung der Verbindungsglieder sichergestellt werden soll, dass die Tragelemente und damit die von diesen getragenen Rollen in jeder Expansionsstellung in jeweils gleichem Stand voneinander angeordnet sind.

Die EP 0 078 072 A1 zeigt ähnlich der WO 2004/088301 A1 eine Trageinheit, bei der Rollen über Zentrierarme gelenkig mit einer Zentraleinheit verbunden sind. Konzentrisch um diese ist ein Ring angeordnet, mit dem die Arme über Verbindungsglieder verbunden sind. Wird die angulare Relativposition der Zentraleinheit und des Rings verändert, ändert dies die radiale Erstreckung der Zentrierarme und damit der Rollen unter Beibehaltung ihres angularen Abstandes.

Die EP 1 046 856 A2 zeigt eine Vorrichtung zum Bewegen eines Molches durch eine Rohrleitung mit einer Dichteinrichtung. Die Vorrichtung weist eine Trageinheit mit einzelnen Tragarmen auf, die an ihrem Innenumfang um zur Bewegungsrichtung (und Symmetrieachse der gesamten Vorrichtung) senkrecht Schwenkachsen verschwenkbar sind und an ihrem Außenumfang flexible Dichtelemente tragen, so dass die Anordnung aus Tragarm und Dichtelementen sich an unterschiedliche Durchmesser unter Gewährleitung der Dichtwirkung anpassen kann, wodurch unter Einwirkung des in der Rohrleitung strömenden Mediums die Bewegung des eine solche Dichteinrichtung aufweisenden Molches gesichert ist.

Der Erfindung liegt die Aufgabe zugrunde, eine Vorrichtung der eingangs genannten Art zu schaffen, die unter Vermeidung der vorgenannten Nachteile insbesondere in Rohrleitungen mit verschiedenen Normweiten verwendet werden kann und dabei eine hohe Betriebssicherheit, eine größere Messauflösung durch als Sensoren ausgebildete Bauteile in Umfangsrichtung sowie eine einfache und kostengünstige Bauweise aufweist.

Erfindungsgemäß wird diese Aufgabe mit einer Vorrichtung der eingangs genannten Art dadurch gelöst, welche das kennzeichnende Merkmal des Anspruchs 1 aufeist. Verfahrensmäßig sieht die Erfindung das kennzeichnende Merkmal des Anspruchs 24 vor.

Bei einer erfindungsgemäß ausgebildeten Vorrichtung wird also ein gleichgroßer Abstand in Umfangsrichtung der Rohrleitung zwischen jeweils zwei aufeinanderfolgenden Trägerelementen durch ein Verschwenken der Verbindungselemente in oder entgegen der Bewegungsrichtung des Molchs während des Expandierens der Tragelemente erzielt. Dadurch wird eine gleichmäßige Verteilung der Bauteile in Umfangsrichtung der Rohrleitung bei unterschiedlichen Rohrdurchmessern erreicht.

Dabei sind auf den jeweiligen Tragelementen mindestens zwei Bauteile in Umfangsrichtung der Rohrleitung in jeder Expansionsstellung versetzt angeordnet. Alternativ sind in einer bestimmten Expansionsstellung die Bauteile auf den jeweiligen Tragelementen zur Bewegungsrichtung des Molchs parallel angeordnet.

In bevorzugter Ausführung sind die Bauteile auf den jeweiligen Tragelementen in Erstreckungsrichtung des Tragelements aufeinanderfolgend angeordnet, welche einen Winkel von weniger als 90° zur Bewegungsrichtung des Molchs bildet, wobei das Tragelement und der in Umfangsrichtung der Rohrleitung gekrümmt ist. Bei einem Wechsel der Expansionsstellung der Tragelemente verändert sich der Winkel der Erstreckungsrichtung des Tragelements und der aufeinanderfolgend angeordneten Bauteile in Bezug auf die Bewegungsrichtung des Molchs. Nach einem Expandieren der Tragelemente ist dieser Winkel größer und nach einem Komprimieren der Tragelemente ist dieser Winkel kleiner. Dadurch wird in verschiedenen Expansionsstellungen eine lückenlose Anordnung von Bauteilen entlang des gesamten Rohrumfangs erzielt. Insbesondere wird bei der Bewegung des Molchs durch eine gegebene axiale Position der Rohrleitung der gesamte Rohrumfang an dieser axialen Position gleichmäßig von den Bauteilen durchquert. Dabei weisen bevorzugt alle Bauteile in jedem Expansionszustand den gleichen radialen Abstand zur Rohrwand auf.

In bevorzugter Ausführung sind jeweils zwei aufeinanderfolgende Tragelemente durch jeweils zwei angelenkte Verbindungsglieder schwenkbar miteinander verbunden. Weiterhin ist jeweils ein Verbindungsglied an drei aufeinanderfolgenden Tragelementen derart angeordnet, dass sich beim Schwenken des Verbindungsglieds um eine Achse am jeweils mittleren Tragelement der Abstand der jeweils äußeren Tragelemente zum mittleren Tragelement in gleichem Maße vergrößert oder verkleinert. Dies wird dadurch erreicht, dass das Verbindungsglied an seinem Mittelstück in der Mitte des jeweils mittleren Tragelements und an seinen Endstücken bevorzugt an einem vorderen bzw. einem hinteren Ende des jeweils einen bzw. jeweils anderen äußeren Tragelements in jeweils gleichem Abstand zur Mitte angelenkt ist.

Dabei weisen die Verbindungsglieder in bevorzugter Ausführung eine doppelte S-Form auf. Die Verbindungsglieder können auch als Tragelemente zur Aufnahme von der Rohrwand zugewandten Bauteilen ausgebildet sein. Dabei kann es sich insbesondere um Sensoren zur Durchführung von Messungen an der Rohrleitung handeln.

Die Anzahl der Tragelemente ist je nach Rohrwandgrößen oder der Aufgabe entsprechend frei wählbar. Weiterhin ist auch die Anzahl und der Abstand der auf den Tragelementen angeordneten Bauteilen veränderbar.

In bevorzugter Ausführung sind die Tragelemente und/oder die Verbindungsglieder flexibel gestaltet, um sich an die Form der Rohrwand anzupassen. Dadurch ist auch bei Ovalitäten, Beulen oder sonstigen Unrundheiten der Rohrleitung eine hohe Funktionsfähigkeit gewährleistet. Die Tragelemente können dabei durch jeweils ein flexibles Grundelement, beispielsweise aus Federstahl oder Kunststoff, oder aus mehreren flexibel miteinander verbundenen Einzelteilen gebildet sein. In vorteilhafter Ausführung haben die Verbindungsglieder das gleiche Widerstandsmoment wie die Tragelemente. Insbesondere wenn die Verbindungsglieder in ihrer Wirkungsweise als Feder ausgebildet sind, ist eine hohe Anpassungsfähigkeit der Trageinheit an die geometrischen Gegebenheiten gewährleistet.

Zur radialen Positionierung können die Tragelemente an einem Traggestell angeordnet sein und von diesem getragen werden. Dieses Traggestell kann jeweils zwei einem Tragelement zugeordnete Führungselemente umfassen, die in Bezug auf die Bewegungsrichtung des Molchs vorn und hinten angeordnet sind. Die Führungselemente können sich flexibel den geometrischen Verhältnissen anpassen und sind durch eine Verbindungsmechanik miteinander verbunden. Wenn wenig Raum zur Verfügung steht kann das Traggestell auch nur ein jeweils einem Tragelement zugeordnetes Führungselement umfassen.

In weiterhin bevorzugter Ausführung umfasst das Traggestell eine Spreizmechanik, die die der Rohrwand zugewandten Bauteile in die gewünschte radiale Position bringt und fixiert. Diese Spreizmechanik kann einzelne Federelemente umfassen, die an mehreren oder allen Tragelementen angeordnet sind und in radialer Richtung wirken. Alternativ können die Federelemente tangential zur Umfangsrichtung der Rohrleitung wirken, wobei durch die Krümmung der Rohrleitung eine radiale Komponente zum Positionieren der Tragelemente erzeugt wird.

Eine bevorzugte Ausbildung des erfindungsgemäßen Verfahrens sieht vor, dass beim Expandieren der Tragelemente der Winkel einer Achse, auf der jeweils wenigstens zwei der Bauteile aufeinander folgend angeordnet sind und die in Umfangsrichtung der Rohrleitung gekrümmt ist, bezüglich der Bewegungsrichtung des Molchs in jeweils gleichem Maße vergrößert wird.

Nachfolgend ist die Erfindung anhand bevorzugter Ausführungsformen unter Bezugnahme auf die Zeichnungen näher erläutert. Es zeigen:
- Fig. 1(a): eine Seitenansicht eines erfindungsgemäßen Tragelements;
- Fig. 1(b): eine Draufsicht eines erfindungsgemäßen Tragelements;
- Fig. 2: eine schematische Draufsicht einer erfindungsgemäßen Anordnung von Tragelementen in zwei verschiedenen Expansionsstellungen;
- Fig. 3: einen schematischen Querschnitt einer erfindungsgemäßen Anordnung von Tragelementen in zwei verschiedenen Expansionsstellungen;
- Fig. 4: eine Draufsicht einer erfindungsgemäßen Trageinheit in zwei verschiedenen Expansionsstellungen;
- Fig. 5: eine perspektivische Innenansicht einer erfindungsgemäßen Trageinheit, bei einer Anpassung entlang des Innenumfangs einer Rohrleitung;
- Fig. 6: eine Seitenansicht eines erfindungsgemäßen Tragelements mit einem Führungselement eines Traggestells;
- Fig. 7: einen schematischen Querschnitt einer erfindungsgemäßen Anordnung von Tragelementen mit einem Traggestell in zwei verschiedenen Expansionsstellungen;
- Fig. 8: eine schematische Vorderansicht einer erfindungsgemäßen Anordnung von Tragelementen in zwei verschiedenen Expansionsstellungen;
- Fig. 9: eine schematische Seitenansicht einer erfindungsgemäßen Anordnung von Bauteilen in zwei verschiedenen Expansionsstellungen;

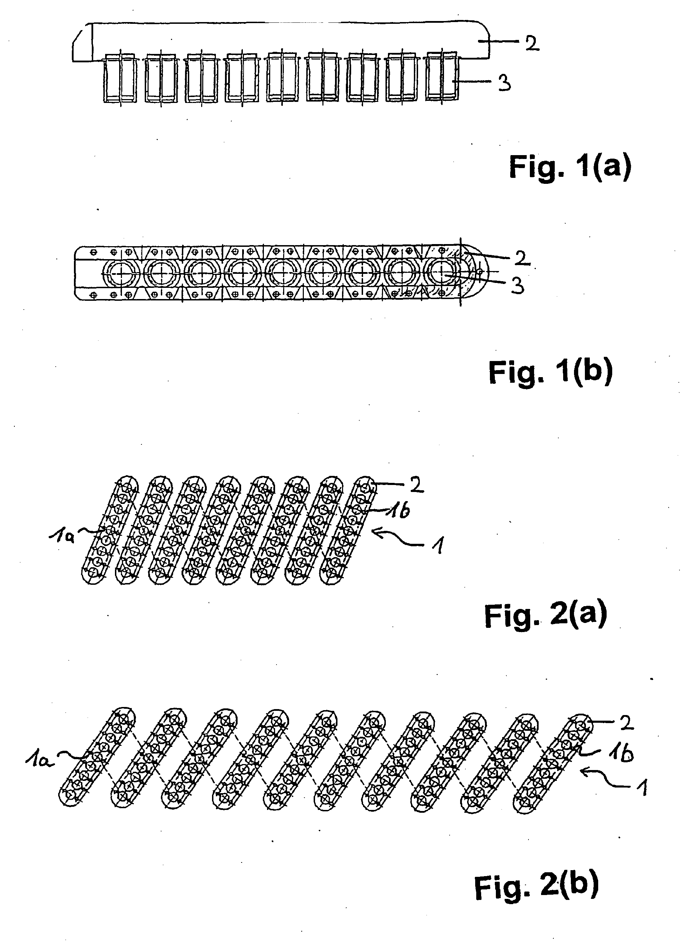

Die Fig. 1(a) zeigt in einer Seitenansicht und die Fig. 1(b) in einer Draufsicht ein einzelnes Tragelement 2 einer in einem Molch einsetzbaren erfindungsgemäßen Trageinheit. Das Tragelement weist in Erstreckungsrichtung des Tragelements, in nicht kraftbeaufschlagten ebenen Zustands desselben gradlinig aneinandergereihte Rezeptoren zur Aufnahme von der Rohrwand zugewandten Bauteilen 3 auf, wie z.B. Sensoren zur Durchführung von Rohrleitungsprüfungen.

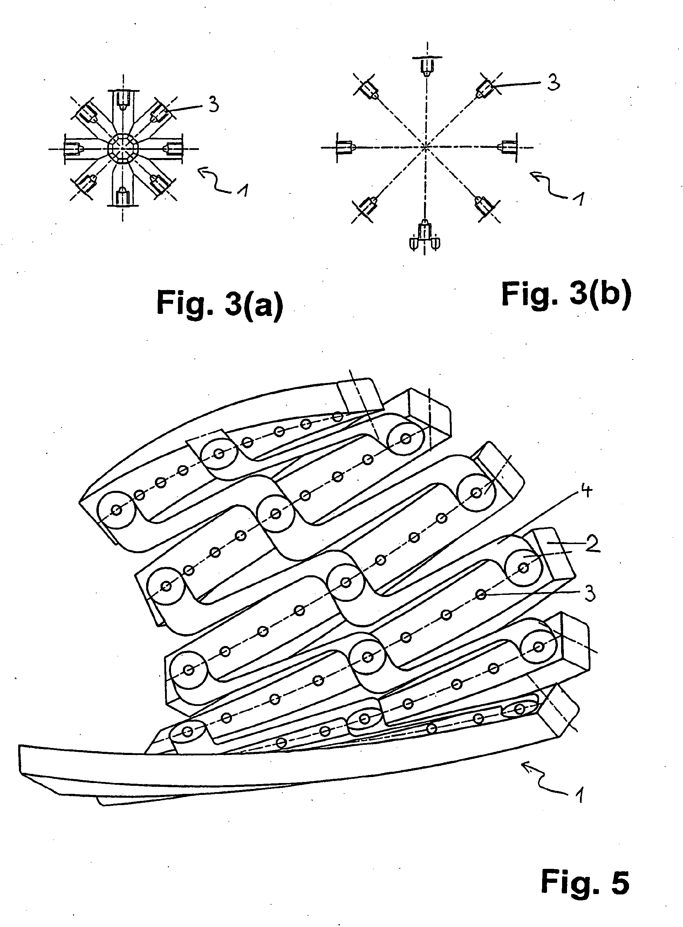

Die Fig. 2(a) zeigt schematisch in ausgebreiteter Darstellung die Anordnung von Tragelementen in einer erfindungsgemäßen Trageinheit 1, wobei jeweils zwei aufeinanderfolgende Tragelemente 2 den gleichen Abstand voneinander haben, so dass auch jeweils zwei in horizontaler Richtung benachbarte Bauteile 3 den gleichen Abstand aufweisen. Im Einsatz ist die Trageinheit 1 derart kreisförmig gebogen, dass ihre Enden 1a, 1b benachbart sind (siehe hierzu auch Fig. 3a, 3b).

Nach einer Expansion der geschlossenen Trageinheit 1 ist der jeweilige Abstand zwischen zwei aufeinanderfolgenden Tragelementen 2 in gleichem Maße vergrößert, wie in Fig. 2(b) schematisch dargestellt ist. Um weiterhin trotz vergrößertem Abstand bei einer Bewegung des Molchs in vertikaler Richtung eine gleichmäßige und lückenlose Abdeckung der durchquerten Oberfläche durch die Bauteile 3 zu erzielen, sind die jeweiligen Tragelemente 2 im vergleich zu Fig. 2(a) gleichmäßig in vertikaler Richtung gedreht.

In bevorzugter Ausführung sind die Tragelemente 2 flexibel ausgebildet, so dass eine Anpassung an gekrümmte Oberflächen möglich ist. Dadurch wird insbesondere beim Durchqueren von Rohrleitungen eine gleichmäßige Anordnung der Bauteile 3 in radialer Richtung an der Innenwandung erzielt. Dabei sind die Tragelemente 3 der Fig. 2 auf einer zylindrischen Oberfläche derart angeordnet, dass der Abstand zwischen erstem und letztem Tragelement dem jeweiligen Abstand der übrigen Tragelemente entspricht. In Fig. 3(a) ist ein schematischer Querschnitt einer solchen Anordnung dargestellt. Die Bauteile 3 sind entlang des Rohrumfangs in gleichem Abstand voneinander angeordnet. Nach einer Expansion der Trageinheit 1 vergrößert sich der jeweilige Abstand zwischen den Bauteilen, wie aus Fig. 3(b) ersichtlich ist.

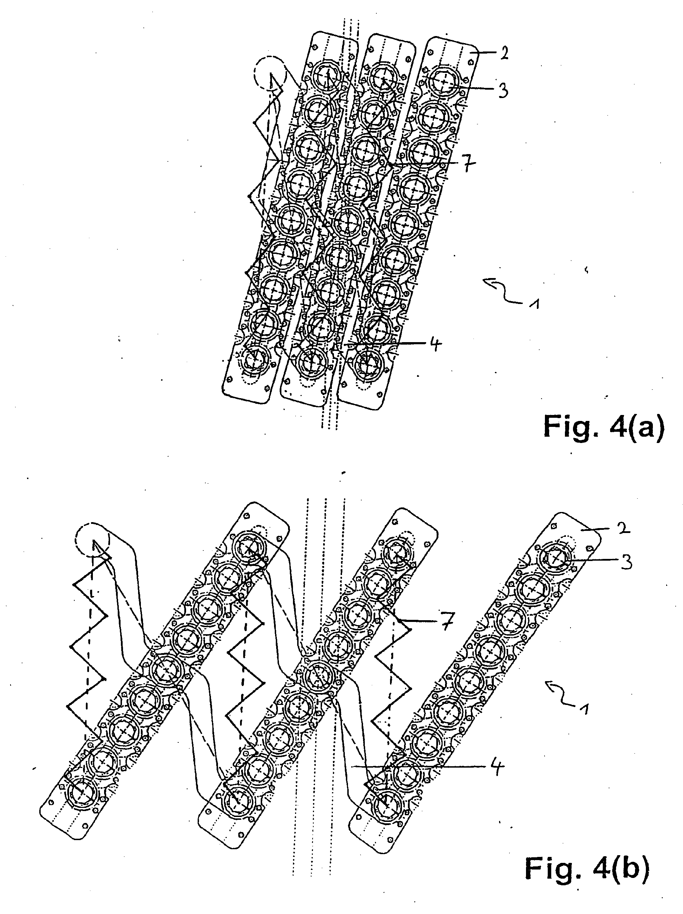

Die Positionierung bzw. das Verschwenken der einzelnen Trageinheiten 2 erfolgt bei einem Wechsel der Expansionsstellung über wenigstens ein an jeweils wenigstens zwei aufeinanderfolgenden Tragelementen angelenktes Verbindungsglied. Die Fig. 4a, 4b zeigen eine solche Trageinheit 1 mit Verbindungsgliedern 4, die in doppelter S-Form ausgebildet sind. Dabei ist jeweils ein Verbindungsglied 4 an jeweils drei aufeinanderfolgende Tragelemente 2 derart angelenkt, dass eine Schwenkachse in der Mitte des jeweils mittleren Tragelements 2 gebildet ist, um die die jeweils äußeren Tragelement bei einer Expansion in Bewegungsrichtung des Molchs geschwenkt werden. Weiterhin sind jeweils zwei aufeinanderfolgende Tragelemente 2 durch jeweils zwei angelenkte Verbindungsglieder derart schwenkbar miteinander verbunden, dass beim Schwenken ein Vergrößern bzw. Verkleinern des Abstands zwischen jeweils zwei aufeinanderfolgenden Tragelementen 2 in gleichem Maße erzielt wird. Hierzu weisen die jeweils äußeren Gelenkachsen eines Tragelements 2 den gleichen Abstand zur mittleren Gelenkachse auf. In einer bevorzugten Weiterbildung sind jeweils zwei aufeinanderfolgende Tragelemente 2 an ihren gegenüberliegenden Endseiten zusätzlich mittels jeweils eines Federelements 7 verbunden. Die resultierende Federkraft zwischen zwei aufeinanderfolgenden Tragelementen 2 bewirkt ein derartiges Verschwenken der Verbindungsglieder 4, dass eine größtmögliche Oberfläche durch die Trageinheit 1 abgedeckt wird.

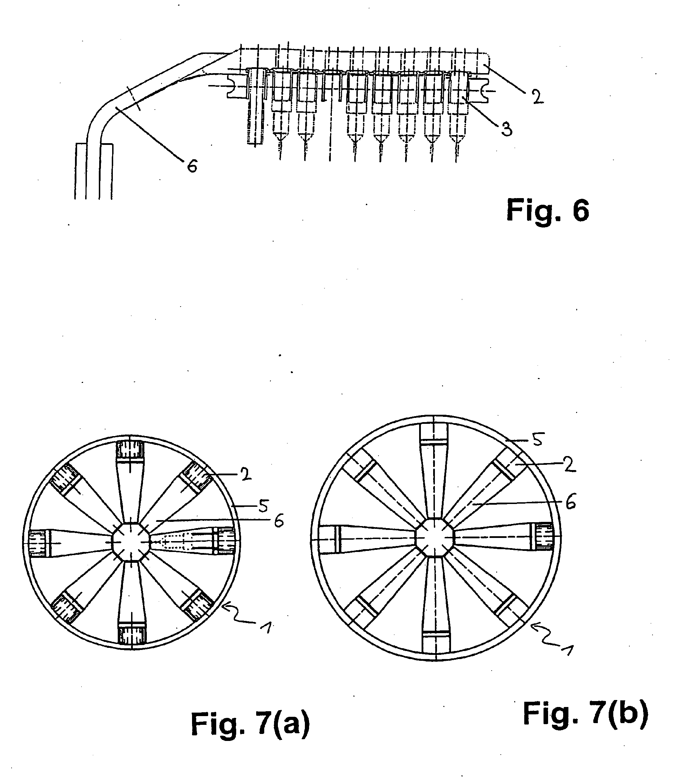

In bevorzugter Ausführung sind auch die Verbindungsglieder 4 flexibel ausgebildet, so dass bei einer Anpassung an den Umfang der Rohrleitung die Trageinheit 1 in einen zylinderförmigen Hohlkörper eingehüllt ist, wie in Fig. 5 veranschaulicht ist, und die jeweils äußeren Tragelemente 2 in Fig. 6 durch Verbindungsglieder 4 in der oben beschriebenen Art schwenkbar miteinander verbunden sind. Die in Fig. 4 abgebildeten Federelemente 7 bewirken dabei eine selbstführende Anpassung der Tragelemente 2 entlag des Innenumfangs der Rohrleitung bei beliebigen Rohrdurchmessern.

Zur Anordnung und Fixierung der Tragelemente 2 in radialer Richtung sind diese an jeweils mindestens ein Führungselements 6 eines Traggestells aufgebracht. Die Fig. 6 zeigt ein solches Führungselement 6 an einem Tragelement 2, wobei die flexible Ausbildung des Führungselements 6 eine Anpassung an unterschiedliche Rohrgeometrien erlaubt. In Fig. 7 ist ein schematischer Querschnitt einer erfindungsgemäßen Anordnung von Tragelementen 2 mit jeweils einem Führungselement 6 entlang des Innenumfangs der Rohrwandung 5 dargestellt, in zwei verschiedenen Expansionsstellungen.

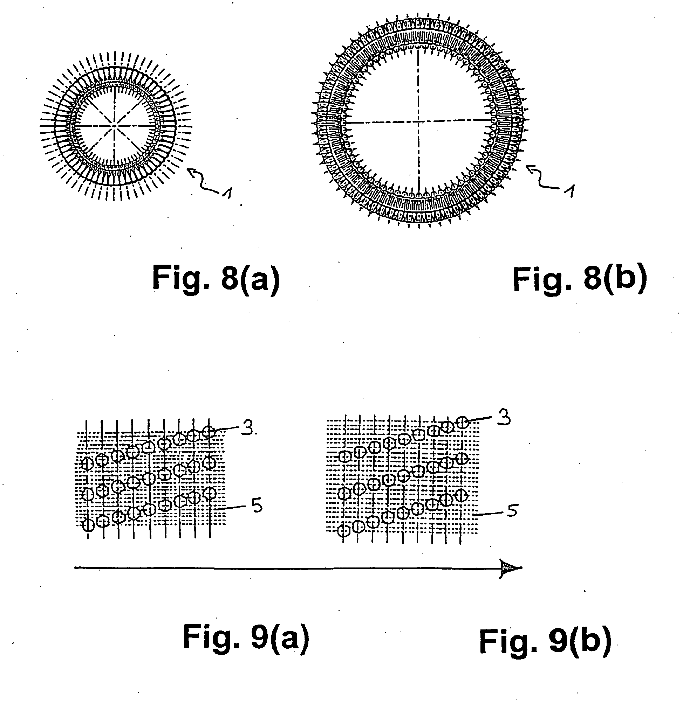

Derart erfolgt bei einer Bewegung durch die Rohrleitung eine gleichmäßige und lückenlose Abdeckung der Oberfläche durch die Bauteile 3, durch die mit zunehmendem Abstand im Vergleich zur Bewegungsrichtung zunehmend gedrehten Tragelemente 2 und der damit zunehmenden Versetzung der Bauteile der jeweiligen Tragelemente in Umfangsrichtung der Rohrleitung. Dies wird in Fig. 8 veranschaulicht, einer schematischen Vorderansicht der Trageinheit 1 in zwei Expansionsstellungen. Sowohl in der weniger expandierten Stellung in Fig. 8(a) als auch in der weiter expandierten Stellung in Fig. 8(b) erfolgt eine lückenlose Abdeckung der Rohrleitung in Umfangsrichtung.

Dabei schließt in jeder Expansionsstellung bevorzugt das jeweils letzte Bauteil 3 eines Tragelements 2 an das jeweils erste Bauteil des folgenden Tragelements im gleichen Abstand wie zwischen den Bauteilen jeweils eines Tragelements in Umfangsrichtung der Rohrleitung 5 an. Dies ist in Fig. 9a, 9b gezeigt, in einer schematischen Seitenansicht der Trageinheit 1 in zwei Expansionsstellungen entlang der Rohrleitung 5. Die Bewegungsrichtung des Molchs ist durch einen Pfeil gekennzeichnet. Somit ergibt sich bei verschiedenen Rohrleitungsdurchmessern eine lückenlose Anordnung von Bauteilen entlang des gesamten Rohrumfangs, wobei jedes einzelne Bauteil 3 auf den Tragelementen einem bestimmten Punkt des Rohrumfangs zugeordnet ist. Insbesondere bei der Durchführung von Rohrleitungsmessungen wird dadurch eine maximal mögliche Messauflösung bei einer vorgegebenen Anzahl von Sensoren erzielt.

## Patentansprüche

1. Trageinheit (1) eines durch eine Rohrleitung bewegbaren Molchs mit radial expandierbaren Tragelementen (2) zur Aufnahme von der Rohrwand zugewandten Bauteilen (3), wobei die Tragelemente (2) in Umfangsrichtung der Rohrleitung aufeinander folgend angeordnet sind, wobei wenigstens ein Tragelement (2) mit wenigstens einem Verbindungsglied (4) derart verbunden ist, dass die Tragelemente (2) in jeder Expansionsstellung in jeweils gleichem Abstand voneinander angeordnet sind, **dadurch gekennzeichnet, dass** jeweils wenigstens zwei aufeinanderfolgende Tragelemente (2) durch wenigstens ein an diesen angelenktes Verbindungsglied (4) schwenkbar miteinander verbunden sind und dass jeweils ein Verbindungsglied (4) an drei aufeinanderfolgenden Tragelementen (2) derart angeordnet ist, dass sich beim Schwenken des Verbindungsglieds (4) um eine Achse am jeweils mittleren Tragelement der Abstand der jeweils äußeren Tragelemente zum mittleren Tragelement in gleichem Maße vergrößert oder verkleinert.

2. Trageinheit nach Anspruch 1, **dadurch gekennzeichnet, dass** jeweils zwei aufeinanderfolgende Tragelemente (2) durch jeweils zwei angelenkte Verbindungsglieder (4) schwenkbar miteinander verbunden sind.

3. Trageinheit nach Anspruch 1, **dadurch gekennzeichnet, dass** das an jeweils drei aufeinanderfolgenden Tragelementen (2) angeordnete Verbindungsglied (4) an dessen Mittelstück in der Mitte des jeweils mittleren Tragelements und dessen Endstücke an einem vorderen bzw. einem hinteren Ende des jeweils einen bzw. jeweils anderen äußeren Tragelements angeordnet ist.

4. Trageinheit nach einem der vorangehenden Ansprüche, **dadurch gekennzeichnet, dass** die Verbindungsglieder (4) in doppelter S-Form ausgebildet sind.

5. Trageinheit nach einem der vorangehenden Ansprüche, **dadurch gekennzeichnet, dass** die Tragelemente (2) in jeder Expansionsstellung derart angeordnet sind, dass jeweils mindestens zwei Bauteile (3) in Umfangsrichtung der Rohrleitung versetzt angeordnet sind.

6. Trageinheit nach einem der vorangehenden Ansprüche, **dadurch gekennzeichnet, dass** die Tragelemente (2) in der am meisten komprimierten Expansionsstellung wenigstens jeweils zwei zur Bewegungsrichtung des Molchs parallel angeordnete Bauteile (3) aufweisen und in jeder anderen Expansionsstellung derart angeordnet sind, dass jeweils wenigstens zwei Bauteile (3) in Umfangsrichtung der Rohrleitung versetzt angeordnet sind.

7. Trageinheit nach einem der vorangehenden Ansprüche, **dadurch gekennzeichnet, dass** in jeder Expansionsstellung jeweils wenigstens zwei der Bauteile (3) auf den Tragelementen (2) in Erstreckungsrichtung des Tragelements (2) aufeinanderfolgen, welche einen Winkel von weniger als 90 Grad zur Bewegungsrichtung des Molchs bildet, wobei das Tragelement (2) in Umfangsrichtung der Rohrleitung gekrümmt ist.

8. Trageinheit nach einem der vorangehenden Ansprüche, **dadurch gekennzeichnet, dass** wenigstens zwei der Bauteile (3) auf den Tragelementen (2) in Erstreckungsrichtung des Tragelements (2) aufeinanderfolgen, deren Winkel bezüglich der Bewegungsrichtung des Molchs sich beim. Expandieren der Tragelemente (2) vergrößert, wobei das Tragelement (2) in Umfangsrichtung der Rohrleitung gekrümmt ist.

9. Trageinheit nach einem der vorangehenden Ansprüche, **dadurch gekennzeichnet, dass** wenigstens zwei der Bauteile (3) auf den Tragelementen (2) in Erstreckungsrichtung des Tragelements (2) aufeinanderfolgen, deren Winkel bezüglich der Bewegungsrichtung des Molchs sich beim Komprimieren der Tragelemente (2) verkleinert, wobei das Tragelement (2) in Umfangsrichtung der Rohrleitung gekrümmt ist.

10. Trageinheit nach einem der vorangehenden Ansprüche, **dadurch gekennzeichnet, dass** die an den Tragelementen (2) aneinandergereihten Bauteile (3) Sensoren zur Durchführung von Messungen an der Rohrleitung sind.

11. Trageinheit nach einem der vorangehenden Ansprüche, **dadurch gekennzeichnet, dass** die Anzahl der Tragelemente (2) dem Durchmesser oder der Größe der Rohrwand gegebenenfalls unter Berücksichtigung eines jeweiligen Abstandes zu dieser, anpassbar ist.

12. Trageinheit nach einem der vorangehenden Ansprüche, **dadurch gekennzeichnet, dass** die Anzahl und der Abstand der auf den Tragelementen (2) angeordneten Bauteile (3) veränderbar ist.

13. Trageinheit nach einem der vorangehenden Ansprüche, **dadurch gekennzeichnet, dass** die Tragelemente (2) flexibel gestaltet sind, um sich an die Form der Rohrwand anzupassen.

14. Trageinheit nach Anspruch 13, **dadurch gekennzeichnet, dass** die Tragelemente (2) durch jeweils ein flexibles Grundelement, beispielsweise aus Federstahl oder Kunststoff, gebildet sind.

15. Trageinheit nach Anspruch 13, **dadurch gekennzeichnet, dass** die Tragelemente (2) aus mehreren flexibel miteinander verbundenen Einzelteilen gebildet sind.

16. Trageinheit nach einem der vorangehenden Ansprüche, **dadurch gekennzeichnet, dass** die Verbindungsglieder (4) das gleiche Widerstandsmoment wie die Tragelemente haben.

17. Trageinheit nach einem der vorangehenden Ansprüche, **dadurch gekennzeichnet, dass** die Verbindungsglieder (4) federnd ausgebildet sind, so dass die Trageinheit (1) sich den durch die Rohrwandung bestimmten geometrischen Gegebenheiten anpasst.

18. Trageinheit nach einem der vorangehenden Ansprüche, **dadurch gekennzeichnet, dass** die Tragelemente (2) an einem Traggestell angeordnet und von diesem getragen werden.

19. Trageinheit nach Anspruch 18, **dadurch gekennzeichnet, dass** das Traggestell jeweils zwei in Bezug auf die Bewegungsrichtung des Molchs vorn und hinten an den Tragelemente (2) angeordnete Führungselemente (6) aufweist, die flexibel sich den geometrischen Verhältnissen anpassen können und durch eine Verbindungsmechanik miteinander verbunden sind.

20. Trageinheit nach Anspruch 18, **dadurch gekennzeichnet, dass** bei wenig Raum das Traggestell ein in Bezug auf die Bewegungsrichtung des Molchs an den Tragelemente (2) vorne angeordnetes flexibles Führungselement (6) aufweist.

21. Trageinheit nach einem der Ansprüche 18 bis 20, **dadurch gekennzeichnet, dass** das Traggestell eine Spreizmechanik umfasst, die die der Rohrwand zugewandten Bauteile (3) in die gewünschte radiale Position bringt und fixiert.

22. Trageinheit nach vorangehendem Anspruch, **dadurch gekennzeichnet, dass** die Spreizmechanik einzelne Federelemente (7) umfasst, die zumindest an mehreren Tragelementen (2) angeordnet sind und in radialer Richtung wirken.

23. Trageinheit nach Anspruch 21, **dadurch gekennzeichnet, dass** die Spreizmechanik einzelne Federelemente (7) umfasst, die zumindest an mehreren Tragelementen (2) angeordnet sind und tangential zur Umfangsrichtung der Rohrleitung wirken, wobei durch die Wirkung der Rohrleitung in Kupplungsrichtung eine radiale Komponente zum Positionieren der Tragelemente erzeugt wird.

24. Verfahren zum Positionieren von der Rohrwand zugewandten Bauteilen (3) eines durch eine Rohrleitung bewegbaren Molchs mit radial expandierbaren Tragelementen (2) zur Aufnahme von den der Rohrwand zugewandten Bauteilen (3), wobei die Tragelemente (2) in Umfangsrichtung der Rohrleitung aufeinanderfolgend angeordnet sind, wobei der jeweilige Angularabstand der Tragelemente durch Verbindungsglieder (4) unter Einwirkung radial ein-oder auswärts wirkender Kräfte derart verändert wird, dass beim Expandieren bzw. Komprimieren der jeweilige Abstand zweier aufeinanderfolgender Tragelemente(2) in jeweils gleichem Maße vergrößert bzw. verkleinert wird, **dadurch gekennzeichnet, dass** beim Schwenken jeweils eines an drei aufeinanderfolgenden Tragelementen (2) schwenkbar angeleneten Verbindungsgliedes (4) um eine Achse am jeweils mittleren Tragelement der Abstand der jeweils äußeren Tragelemente in gleichem Maße vergrößert oder verkleinert wird.

25. Verfahren nach Anspruch 24, **dadurch gekennzeichnet, dass** beim Expandieren der Tragelemente (2) der Winkel in Erstreckungsrichtung des Tragelements (2), auf der jeweils wenigstens zwei der Bauteile (3) aufeinander folgend angeordnet sind, bezüglich der Bewegungsrichtung des Molchs in jeweils gleichem Maße vergrößert wird, wobei das Tragelement (2) in Umfangsrichtung der Rohrleitung gekrümmt ist.

## Claims

1. Support unit for a scraper movable through a pipeline with radially expandable support elements for receiving components facing the pipe wall, the support elements being successively arranged in the circumferential direction of the pipeline, wherein in each case at least two successive support elements are pivotably interconnected by at least one connecting member articulated thereto that the support elements in each expansion position are equidistantly spaced, **characterized in that** in each case at least two successive support elements are pivotaby interconnected by at least one connecting numbers and that wherein in each case one connecting member is located on three successive support elements such that on pivoting the connecting member about an axis on the in each case central support element the spacing off the in each case outer support elements with respect to the central support element is increased or decreased by the same amount.

2. Support unit according to claim 1, wherein in each case two successive support elements are pivotably interconnected by two articulated connecting members.

3. Support unit according to one of the preceeding claims, wherein the connecting member located on three successive support elements is arranged by its centrepiece in the centre of the in each case central support element and by its end pieces on a front or rear end of one or other outer support element.

4. Support unit according to one of the preceeding claims, wherein the connecting members have a double S-shape.

5. Support unit according to one of the preceeding claims, wherein the support elements in each expansion position are arranged in such a way that at least two components are displaced in the pipeline circumferential direction.

6. Support unit according to one of the preceeding claims, wherein the support elements in the most compressed expansion position have at least two components arranged parallel to the scraper movement direction and in every other expansion position are so arranged that in each case at least two components are displaced in the pipeline circumferential direction.

7. Support unit according to one of the preceeding claims, wherein in each expansion position in each case at least two of the components succeed one another on the support elements in the extension direction of the latter, enclosing an angle of less than 90° to the scraper movement direction, whereas the support element is being curved in the circumferential direction of the pipeline.

8. Support unit according to one of the preceeding claims, wherein at least two of the components are successively located on the support elements in the extension direction of the latter, whose angle increases with respect to the scraper movement direction increases on expanding the support elements, whereas the support element being curved in the pipeline circumferential direction.

9. Support unit according to one of the preceeding claims, wherein at least two of the components are successively arranged on the support elements in the extension direction of the latter whose angle decreases with respect to the scraper movement direction decreases on compressing the support elements, whereas the support element being curved in the pipeline circumferential direction.

10. Support unit according to one of the preceeding claims, wherein the components lined up at the support elements are sensors for performing measurements on the pipeline.

11. Support unit according to one of the preceeding claims, wherein the number of support elements is adaptable to the diameter or size of the pipe wall, optionally taking account of the spacing relative thereto.

12. Support unit according to one of the preceeding claims, wherein it is possible to vary the number and spacing of components located on support elements.

13. Support unit according to one of the preceeding claims, wherein the support elements are flexible so as to adapt to the pipe wall shape.

14. Support unit according to claim 13, wherein the support elements are in each case formed by a flexible base element, e.g. of spring steel or plastic.

15. Support unit according to claim 13, wherein the support elements are formed from several flexibly interconnected components.

16. Support unit according to one of the preceeding claims, wherein the connecting members have the same resistance moment as the support elements.

17. Support unit according to one of the preceeding claims, wherein the connecting members are resiliently constructed, so that the support unit adapts to the geometrical conditions determined by the pipe wall.

18. Support unit according to one of the preceeding claims, wherein the support elements are located on a support frame and are supported by the latter.

19. Support unit according to claim 18, wherein the support frame has in each case two guide elements arranged to the front and rear on support elements with reference to the scraper movement direction, which can adapt flexibly to the geometrical conditions and are interconnected by a connecting mechanism.

20. Support unit according to claim 18, wherein when little space is available, the support frame has a single flexible guide element located at the front on the support elements relative to the scraper movement direction.

21. Support unit according to claims 18 to 20, wherein the support frame comprises a spreading mechanism, which brings into and fixes the components facing the pipe wall in the desired radial position.

22. Support unit according to one of the preceeding claims, wherein the spreading mechanism comprises individual spring elements, which are at least located on several support elements and act radially.

23. Support unit according to claim 21, wherein the spreading mechanism comprises individual spring elements, which are at least located on several support elements and act tangentially to the pipeline circumferential direction and as a result of the action of the pipeline in the coupling direction a radial component is produced for positioning the support elements.

24. Method for positioning components facing the pipe wall of a scraper movable through a pipeline having radially expandable support elements for receiving components facing the pipe wall, wherein the support elements succeeding one another in the circumferential direction of the pipeline,
wherein the angular spacing of the support elements is varied by connecting members pivotably articulated thereto and connecting the same under the action of radially inwardly or outwardly acting forces in such a way that on expanding or compressing the spacing between two successive support elements is increased or decreased by the same amount, **characterized in that** on pivoting the connecting member about an axis on the in each case central support element the spacing of the in each case outer support elements with respect to the central support element is increased or decreased by the same amount.

25. Method according to claim 24, wherein on expanding the support elements the angle in the extension direction of the support element on which are successively placed at least two of the components, is increased with respect to the scraper movement direction by the same amount, the support element being curved in the pipeline circumferential direction.

## Revendications

1. Ensemble de support (1) d'un racleur pouvant être déplacé au moyen d'une conduite tubulaire et doté d'éléments de support (2) extensibles dans le plan radial pour loger les éléments (3) orientés vers la paroi de tube, les éléments de support (2) étant disposés les uns à la suite des autres de façon à se superposer dans la direction circonférentielle de la conduite tubulaire, au moins un élément de support (2) étant relié de telle sorte à au moins un élément de jonction (4) que les éléments de support (2) sont disposés à une distance respectivement égale les uns par rapport aux autres dans chaque position d'extension, **caractérisé en ce que** respectivement au moins deux éléments de support (2) successifs sont reliés entre eux de façon pivotante par au moins un élément de jonction (4) articulé à eux et **en ce que** respectivement un élément de jonction (4) est disposé de telle sorte au niveau des trois éléments de support (2) successifs que la distance des éléments de support respectivement extérieurs par rapport à l'élément de support central augmente ou diminue dans une même mesure lors du pivotement de l'élément de jonction (4) autour d'un axe au niveau de l'élément de support respectivement central.

2. Ensemble de support selon la revendication 1, **caractérisé en ce que** respectivement deux éléments de support (2) successifs sont reliés entre eux de façon pivotante au moyen de respectivement deux éléments de jonction (4) articulés.

3. Ensemble de support selon la revendication 1, **caractérisé en ce que** l'élément de jonction (4) disposé respectivement au niveau de trois éléments de support (2) successifs est disposé au niveau de sa pièce centrale au milieu de l'élément de support respectivement central et au niveau de ses pièces d'extrémité au niveau d'une extrémité avant et/ou arrière du respectivement un et/ou du respectivement autre élément de support extérieur.

4. Ensemble de support selon l'une quelconque des revendications précédentes,
**caractérisé en ce que** les éléments de jonction (4) sont réalisés en forme de double S.

5. Ensemble de support selon l'une quelconque des revendications précédentes,
**caractérisé en ce que** les éléments de support (2) sont disposés de telle sorte dans chaque position d'extension que respectivement au moins deux éléments (3) sont disposés de façon décalée dans la direction circonférentielle de la conduite tubulaire.

6. Ensemble de support selon l'une quelconque des revendications précédentes,
**caractérisé en ce que** les éléments de support (2) comportent, dans la position d'extension comprimée au maximum, respectivement au moins deux éléments (3) disposés parallèlement à la direction de déplacement du racleur et disposés de telle sorte dans toutes les autres positions d'extension que respectivement au moins deux éléments (3) sont disposés de façon décalée dans la direction circonférentielle de la conduite tubulaire.

7. Ensemble de support selon l'une quelconque des revendications précédentes,
**caractérisé en ce que** dans chaque position d'extension, respectivement au moins deux des éléments (3) se suivent sur les éléments de support (2) dans la direction d'extension de l'élément de support (2) qui forme un angle inférieur à 90 degrés par rapport à la direction de déplacement du racleur, l'élément de support (2) étant incurvé dans la direction circonférentielle de la conduite tubulaire.

8. Ensemble de support selon l'une quelconque des revendications précédentes,
**caractérisé en ce qu'**au moins deux des éléments (3) se suivent sur les éléments de support (2) dans la direction d'extension de l'élément de support (2), leur angle augmentant par rapport à la direction de déplacement du racleur lors de l'extension des éléments de support (2), l'élément de support (2) étant incurvé dans la direction circonférentielle de la conduite tubulaire.

9. Ensemble de support selon l'une quelconque des revendications précédentes,
**caractérisé en ce qu'**au moins deux des éléments (3) se suivent sur les éléments de support (2) dans la direction d'extension de l'élément de support (2), leur angle diminuant par rapport à la direction de déplacement du racleur lors de la compression des éléments de support (2), l'élément de support (2) étant incurvé dans la direction circonférentielle de la conduite tubulaire.

10. Ensemble de support selon l'une quelconque des revendications précédentes, **caractérisé en ce que** les éléments (3) alignés les uns contre les autres au niveau des éléments de support (2) sont des capteurs permettant de réaliser des mesures au niveau de la conduite tubulaire.

11. Ensemble de support selon l'une quelconque des revendications précédentes, **caractérisé en ce que** le nombre d'éléments de support (2) est adaptable au diamètre ou à l'épaisseur de la paroi de tube en tenant compte le cas échéant d'une distance respective avec celle-ci.

12. Ensemble de support selon l'une quelconque des revendications précédentes, **caractérisé en ce que** le nombre et l'écartement des éléments (3) disposés sur les éléments de support (2) peut varier.

13. Ensemble de support selon l'une quelconque des revendications précédentes, **caractérisé en ce que** les éléments de support (2) sont réalisés de façon flexible, pour s'adapter à la forme de la paroi de tube.

14. Ensemble de support selon la revendication 13, **caractérisé en ce que** les éléments de support (2) sont formés respectivement par un élément de base flexible, par exemple en acier à ressort ou en matière synthétique.

15. Ensemble de support selon la revendication 13, **caractérisé en ce que** les éléments de support (2) sont réalisés à partir de plusieurs parties individuelles reliées entre elles de façon flexible.

16. Ensemble de support selon l'une quelconque des revendications précédentes, **caractérisé en ce que** les éléments de jonction (4) ont le même couple de résistance que les éléments de support.

17. Ensemble de support selon l'une quelconque des revendications précédentes, **caractérisé en ce que** les éléments de jonction (4) sont réalisés de façon élastique de façon à ce que l'ensemble de support (1) soit adapté aux différentes formes définies par la paroi de tube.

18. Ensemble de support selon l'une quelconque des revendications précédentes, **caractérisé en ce que** les éléments de support (2) sont disposés au niveau d'un châssis porteur et supportés par celui-ci.

19. Ensemble de support selon la revendication 18, **caractérisé en ce que** le châssis porteur comporte respectivement deux éléments de guidage (6) disposés devant et derrière au niveau des éléments de support (2) par rapport à la direction de déplacement du racleur, lesdits éléments de guidage pouvant s'adapter avec flexibilité aux rapports géométriques et étant reliés entre eux par un mécanisme de jonction.

20. Ensemble de support selon la revendication 18, **caractérisé en ce que** lorsque l'encombrement est réduit, le châssis porteur comporte un élément de guidage (6) flexible disposé à l'avant par rapport à la direction de déplacement du racleur au niveau des éléments de support (2).

21. Ensemble de support selon l'une quelconque des revendications 18 à 20,
**caractérisé en ce que** le châssis porteur comprend un mécanisme d'écartement qui amène les éléments (3) orientés vers la paroi de tube dans la position radiale souhaitée et les fixe à cet endroit.

22. Ensemble de support selon la revendication précédente, **caractérisé en ce que** le mécanisme d'écartement comprend des éléments de ressort (7) individuels disposés au moins au niveau d'une pluralité d'éléments de support (2), et agissant dans la direction radiale.

23. Ensemble de support selon la revendication 21, **caractérisé en ce que** le mécanisme d'écartement comprend des éléments de ressort (7) individuels disposés au moins au niveau d'une pluralité d'éléments de support (2) et agissant tangentiellement par rapport à la direction circonférentielle de la conduite tubulaire, l'effet de la conduite tubulaire permettant de créer dans la direction de couplage une composante radiale pour positionner les éléments de support.

24. Procédé de positionnement des éléments (3) orientés vers la paroi de tube d'un racleur pouvant être déplacé par une conduite et doté d'éléments de support (2) extensibles dans le plan radial pour loger les éléments (3) orientés vers la paroi de tube, les éléments de support (2) étant disposés à la suite les uns des autres dans la direction circonférentielle de la conduite tubulaire, l'écartement angulaire respectif des éléments de support pouvant varier de telle sorte du fait des éléments de jonction (4), sous l'effet de forces agissant radialement ou vers l'extérieur, qu'il augmente et/ou diminue dans une même mesure en cas d'extension et/ou de compression de la distance respective entre deux éléments de support (2) successifs, **caractérisé en ce qu'**en cas de pivotement de respectivement un élément de jonction (4) articulé de façon pivotante à trois éléments de support (2) successifs, la distance des éléments de support respectivement extérieurs augmente ou diminue dans la même mesure autour d'un axe situé au niveau de l'élément de support respectivement central.

25. Procédé selon la revendication 24, **caractérisé en ce qu'**en cas d'extension des éléments de support (2), l'angle augmente dans une mesure respectivement égale dans la direction d'extension de l'élément de support (2) sur lequel respectivement au moins deux des éléments (3) sont disposés à la suite l'un de l'autre, par rapport à la direction de déplacement du racleur, l'élément de support (2) étant incurvé dans la direction circonférentielle de la conduite tubulaire.
